# EUROPEAN PATENT APPLICATION

(11) **EP 4 674 702 A1**
(43) Date of publication of application: **07.01.2026**
(21) Application number: 23718786.9
(22) Date of filing: 28.02.2023
(51) Int. Cl.: B60T 7/10, B60T 8/17, B60T 8/26, B60T 8/32, B60T 8/34, B60T 8/40, B60T 11/18, B60T 11/24, B60T 13/16, B60T 13/18

(54) **COMBINED BRAKING SYSTEM FOR MOTORBIKES**

(71) Applicant: XIU RDI, S.L., 17243 Llambilles Gerona (ES)
(72) Inventor: SERRA ROQUETA, Josep, 17243 LLAMBILLES (Girona) (ES)
(74) Representative: Herrero & Asociados, S.L.
(86) International application number: PCT/ES2023/070111
(87) International publication number: WO 2024/180265

(57) **Abstract**

The combined braking system for motorbikes comprises a first braking element (2) for braking a first wheel of the motorbike; a second braking element (4) for braking a second wheel of the motorbike; a brake lever (1); and a brake pump (3) connected to the brake lever (1), wherein the brake pump (3) is connected to the first and second braking elements (2, 4) such that actuation of the brake lever (1) causes the first and second braking elements (2, 4) to brake the first and second wheels of the motorbike simultaneously.

It provides the simplest and most economical combined braking system for motorbikes possible, eliminating the need for a combined brake unit or dual circuit.

## Description

### Object of the invention

The present invention relates to a combined braking system for motorbikes.

### Background to the invention

The inclusion of a combined braking system, also called CBS, is mandatory on motorbikes for safety reasons.

Prior to the need to include this combined braking system, the brakes on a motorbike operated independently for each wheel, but in some situations, this could lead to locking of one or both wheels and therefore loss of control over the motorbike.

Although experienced riders could control the intensity and distribution of braking, the combined braking system takes care of this correctly on its own.

Combined braking systems therefore allow both wheels to be braked when braking with the front or rear wheel brake control.

These combined braking systems typically comprise a combined brake unit with a front brake pump and a rear brake pump, which connects the wheel brakes to add the combined brake function.

The rear brake pump comprises a piston which moves as the rear wheel is braked, and closes a rear circuit, increasing the rear circuit pressure and thus creating braking torque.

Therefore, when the rear pump is actuated, it does not give pressure to the front brake circuit.

When the front pump brakes, apart from giving pressure to a front circuit and thus a braking torque on the front axle, this pressure passes through the inlet of the rear pump and also gives pressure to the rear circuit.

This same pressure in the rear circuit provides a braking torque despite having the same lower pressure at the rear axle due to the smaller diameter of the rear caliper piston and also the smaller diameter of the rear disc. With the selection of elements a typical braking performance of 70 % on the front axle and 30 % on the rear axle, for example, is achieved.

In case the rider simultaneously wants to brake with the rear pump, he/she shall apply a force which generates a higher pressure than the front circuit in order to increase only the rear circuit pressure and thus the rear braking torque.

This pressure increase will only occur at the rear axle, without increasing the front circuit pressure and may increase the force applied to the front pump lever and front circuit.

Other systems are also known to have special brake calipers with separate dual circuits for braking by both front brake control actuation and rear brake control actuation.

However, these combined braking systems are complex, space-consuming and costly, as they require either the combined braking unit or a dual circuit, as described above.

### Description of the invention

Therefore, an objective of the present invention is to provide a combined braking system for motorbikes that is as simple and economical as possible, eliminating the need for the combined braking unit or dual circuit.

The combined braking system for motorbikes of the invention solves these disadvantages and has other advantages which will be described below.

The combined braking system for motorbikes according to the present invention is described in claim 1, and the dependent claims include additional features that are optional.

In particular, the combined braking system for motorbikes comprises:
- a first braking element for braking a first wheel of the motorbike;
- a second braking element for braking a second wheel of the motorbike;
- a brake lever; and
- a brake pump connected to the brake lever,
wherein the brake pump is connected to the first and second braking elements such that actuation of the brake lever causes the first and second braking elements to brake the first and second wheels of the motorbike simultaneously.

Advantageously, the brake pump is directly connected to:
- the brake lever operating the first braking element; and
- the second braking element.

Furthermore, the brake pump preferably comprises an inlet for connecting the brake lever to the brake pump and an outlet for connecting the second braking element to the brake pump.

In order to withstand a high pressure, this brake pump inlet comprises a threaded bushing and/or a circlip.

The brake lever comprises a brake cylinder, comprising a first output connecting the brake lever to the brake pump and a second output connecting the brake lever to the first braking element.

According to a preferred embodiment, the first and/or second braking elements are brake calipers.

### Brief description of the drawings

For a better understanding of what has been explained above, some drawings are included in which, schematically and only by way of a non-limiting example, a practical case of embodiment is shown.
Figure 1 is a schematic view of the components of the combined motorbike braking system according to the present invention and their connection to each other;
Figure 2 is an elevation view of the brake pump of the combined motorbike braking system according to the present invention in section.

### Description of a preferred embodiment

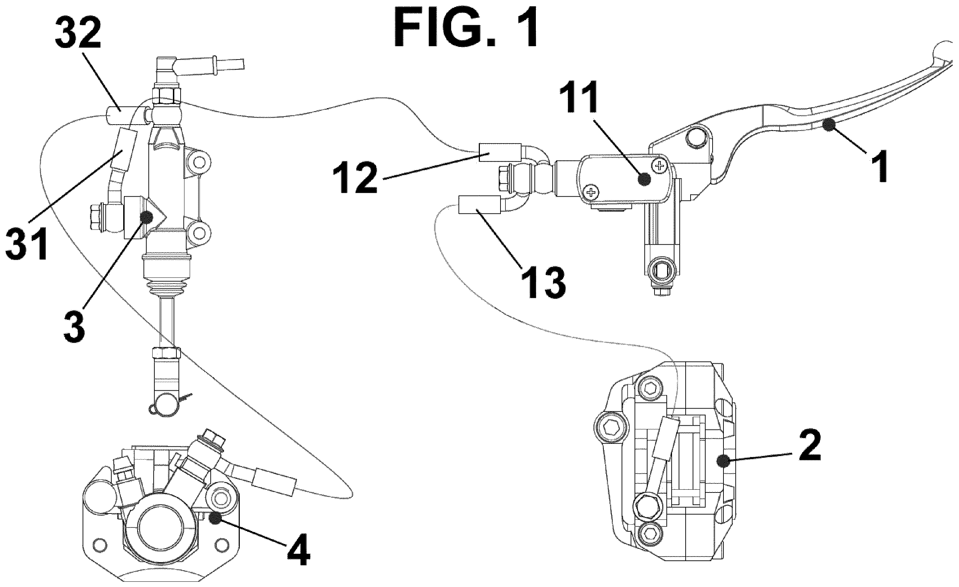

Figure 1 shows the components of the combined braking system for motorbikes according to the present invention and their connection between these components.

In particular, the combined braking system for motorbikes according to the present invention comprises a brake lever 1 connected to a first braking element 2, which brakes a first wheel of the motorbike, for example the front wheel of the motorbike.

Said braking element 2 is preferably a brake caliper.

This brake lever 1 comprises a brake cylinder 11 provided with two outputs 12, 13, one of which, output 13 in figure 1, is connected to the first braking element 2. Thus, when a motorbike driver actuates the brake lever 1, the first braking element 2 brakes the first wheel of the motorbike.

The other outlet 12 of the brake cylinder 11 is connected to an inlet 31 of a brake pump 3, which acts as a one-way valve, and this brake pump also comprises an outlet 32 which is connected to a second braking element 4, which is also preferably a brake caliper. This braking element 4 brakes a second wheel of the motorbike, for example the rear wheel.

This inlet 31 of the brake pump 3 is reinforced, e.g., by means of a threaded bushing 33 and a circlip 34. The inlet 31 must be reinforced because it must withstand a pressurized inlet, unlike conventional systems.

In this way, when the brake lever 1 is actuated, the first and second braking elements 2, 4 are actuated at the same time, simultaneously braking the front and rear wheels of the motorbike, without the need to use a combined brake unit or a dual circuit, as in the prior art combined braking systems.

It should be noted that the connection between the components of the combined braking system according to the present invention can be made in any suitable way, e.g. by means of hoses.

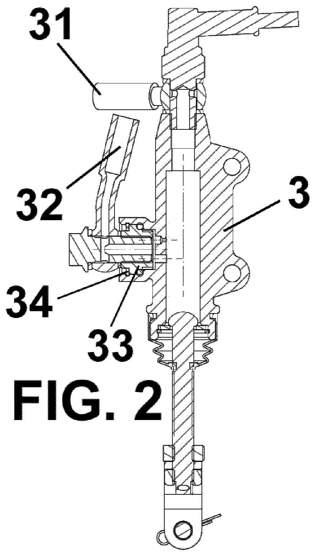

Figure 2 shows in section the brake pump 3 used in the combined braking system according to the present invention.

Unlike conventional brake pumps, this brake pump 3 comprises an inlet 31, which is connected to the brake lever 1, in this embodiment, to the front brake lever of the motorbike.

In this way, the brake lever 1 actuates both braking elements 2, 4 simultaneously when actuated without the use of other elements.

Although reference has been made to a specific embodiment of the invention, it is obvious to a person skilled in the art that the combined braking system for motorbikes described is susceptible to numerous variations and modifications, and that all the details mentioned can be replaced by technically equivalent ones, without departing from the scope of protection defined by the appended claims.

## Claims

1. Combined braking system for motorbikes, comprising:
- a first braking element (2) for braking a first wheel of the motorbike;
- a second braking element (4) for braking a second wheel of the motorbike;
- a brake lever (1); and
- a brake pump (3) connected to the brake lever (1),
**characterized in that** the brake pump (3) is connected to the first and second braking elements (2, 4) so that actuation of the brake lever (1) causes the first and second braking elements (2, 4) to brake the first and second wheels of the motorbike simultaneously.

2. Combined braking system for motorbikes according to claim 1, wherein the brake pump (3) is directly connected to:
- the brake lever (1) operating the first braking element (2); and
- the second braking element (4).

3. Combined braking system for motorbikes according to claim 1 or 2, wherein the brake pump (3) comprises an inlet (31) for connecting the brake lever (1) to the brake pump (3).

4. Combined braking system for motorbikes according to claim 3, wherein the inlet (31) of the brake pump (3) comprises a threaded bushing (33).

5. Combined braking system for motorbikes according to claim 3 or 4, wherein the inlet (31) of the brake pump (3) comprises a circlip (34).

6. Combined braking system for motorbikes according to any one of the preceding claims, wherein the brake pump (3) comprises an outlet (32) for connecting the second braking element (4) to the brake pump (3).

7. Combined braking system for motorbikes according to any one of the preceding claims, wherein the brake lever (1) comprises a brake cylinder (11), comprising a first outlet (12) connecting the brake lever (1) to the brake pump (3) and a second outlet (13) connecting the brake lever (1) to the first braking element (2).

8. Combined braking system for motorbikes according to any one of the preceding claims, wherein the first and/or second braking elements (2, 4) are brake calipers.
